# EUROPEAN PATENT SPECIFICATION

(11) **EP 1 177 891 B1**
(45) Date of publication and mention of the grant of the patent: **26.10.2005**
(21) Application number: 99916040.1
(22) Date of filing: 19.03.1999
(51) Int. Cl.: B32B 15/08, B32B 27/32

(54) **METHOD OF MANUFACTURING PACKAGING LAMINATE**
HERSTELLUNGSVERFAHREN FÜR PACKSTOFFLAMINATE
PROCEDE DE FABRICATION DE LAMINE D'EMBALLAGE

(43) Date of publication of application: 06.02.2002
(73) Proprietor: NIHON TETRA PAK K.K., Tokyo 102-0094 (JP)
(72) Inventor: IKENOYA, Tadakatu, Chiyoda-ku, Tokyo 102-0094 (JP)
(74) Representative: Müller, Hans-Jürgen
(86) International application number: PCT/JP1999/001379
(87) International publication number: WO 2000/056542

(56) References cited:
- WO-A-94/15786
- JP-A- 5 031 850
- JP-A- 7 080 989
- JP-A- 50 104 280

## Description

### Technical Field

This invention relates to a method of manufacturing a laminate for packaging. In detail, this invention relates to a method of manufacturing of a laminate for containers (or carton) for filling and packaging hot liquid food sold with a vending machine etc., and the laminated packaging material which has an oxygen (gas) barrier layer and contains the quality maintenance agent for food to be heated.

### Background Art

A packaging laminated material which is rich in flexibility has been used over many years for packaging of liquid food. The packaging container for cow's milk, juice, sake, white distilled liquor, mineral water, and other drinks is manufactured by for example, forming a tube shape by longitudinal sealing in the elongated direction of the web shape packaging material with crease lines on fibrous substrates (for example, paper etc.) / plastics laminate, filling of the content into the packaging material formed by the tube shape, transversal sealing to the transversal direction of tube shape packaging material, forming to the primary shape of the shape like a cushion or a pillow, cutting to the individual container of a fixed interval in case of web-shape packaging material, forming of the folded final shape in alignment with the crease line. The final shape includes brick shapes with six planes of parallel rectangles, the shape of a polygon pillar, (the shape of a hexagon pillar, an octagonal pillar, etc.), tetrahedron shape with four triangular planes, etc. The material of the fibrous substrate is thick paper usually.

Furthermore, in a paper packaging container of a gable top shape (roof type), paper packaging material is cut in predetermined shape for the blanks sealed in the container lengthwise direction, after sealing the bottom of a blanks by the filling machine, cow's milk, juice, or other drinks are packed from an top opening, the upper part is sealed, and the product container is obtained. In such packaging material, the appearance design of a packaging container product is printed on the surface.

The laminated packaging material used for the conventional paper packaging container product contains the following; low density polyethylene (LDPE) / printing ink layer / paper substrate layer (fibrous career layer) / LDPE / aluminium foil (aluminum layer, gas barrier layer) / LDPE/LDPE, LDPE / printing ink layer / paper substrate layer / LDPE/LDPE, and printing ink layer / LDPE / paper substrate layer / LDPE/LDPE, LDPE / printing ink layer / paper substrate layer / LDPE/aluminum / polyester (PET), etc. The above are also actually used widely now.

In the above-mentioned laminate for packaging, generally, the raw-paper roll of the paper substrate layer is delivered to a printing machine, and a raw-paper side is printed. The printed paper is again wound around to the roll shape, and, subsequently to an extrusion laminator, a paper is sent. Molten polyolefin (for example, LDPE etc.) are extruded from the extrusion machine to the raw-paper side, when there are gas barrier layers (aluminium foil etc.), a molten polyolefin is laminate-coated also between the gas barrier layer and the raw paper, and the laminate is manufactured. When laminating the above gas barrier layers or adding further functional layers, no layers are laminated at once, but separately. A partial preliminary laminate is prepared and is temporarily wound around to a roll shape, and then these partial laminates are laminated, and the final laminate is obtained.

However, the LDPE used is low density polyethylene by the high-pressure method. The low-molecular-weight component contained in high-pressure method low density polyethylene bleeds to the opposite surface to be laminated (surface for laminating) by temporary roll shape. Even if other layers is laminated to the surface for laminating, a good adhesive property is not acquired. And the low-molecular-weight component bleeds to the content in the paper container after containerizing and product-filling, and when preserving at a long period of time, the taste of the content changes.

On the other hand, a laminate for paper containers which uses linear low density polyethylene (LLDPE) for the innermost layer of the laminate for packaging is proposed (JP, 62-78059,A, JP,60-99647,A, etc.). The LLDPE is very excellent in impact hardness, tear strength, cold brittleness-proof, heat-sealing hardness, hot tag performance, etc. However, a method of the solution to the above problem of LDPE is not shown.

On the other hand, a paper container which uses the ethylene alpha olefin copolymer (the so-called metallocene PE, mLLDPE) which polymerized according to the metallocene catalyst for the innermost layer of the laminate for packaging is proposed (JP,7-148895,A, JP,8-337237,A, JP,9-29868,A, JP,9-52299,A, JP,9-76435,A, JP,9-142455,A, JP,9-86537,A, No. 76375 [ nine to ] official report, etc.). The metallocene PE has low-temperature sealable ability, film workability ability, and a good healthy performance by the narrow molecular weight distribution, and the application to a container is known (WO 93/08221, magazine "plastics" Vol44 No. 1 P60, magazine "chemistry economy" Vol39 No. 9 P48, magazine "plastics" the Vol44 No. 10 P83). However, even though metallocene PE has the low concentration of a low-molecular-weight component, in all the various process conditions in the actual manufacturing process of the laminate for packaging, adhesion intensity between the composition layers of the laminate for packaging cannot be improved practical.

When the liquid food is fruit juice of citrus fruits etc., a non-scalping ability to perfume, flavor, etc. and an oxygen barrier are needed. In the liquid food, oxygen passes through the wall of carton and, for the reason, nutritional value of liquid food is lost. In order to reduce permeation of the oxygen to carton and to minimize degradation of nutrients like vitamin C, usually an aluminum foil layer is added to the lamination (laminate) material.

Although aluminium foil is effective as a barrier material, its use brings the environmental concerns, so various trials in which the practical substitute of aluminium foil is developed have been made. The substitute has outstanding barrier properties of oxygen (gas) and perfume, and is a material which can be discarded easily after use.

Using a vapor deposition layer of an inorganic oxide for the packaging material for paper containers as substitution of aluminium foil is proposed conventionally (JP,5-28190,Y, JP,8-500068,A, JP,6-93120,A). By the packaging material which has such a gas (oxygen) barrier, a paper container which has non-scalping ability or a quality keeping ability can be offered. However, the junction (adhesive) performance of the surface of the vapor deposition layer of an inorganic oxide and the adhesives resin for lamination is not good.

Furthermore, in all the various process conditions of the manufacture step of the actual laminate for packaging, practical adhesion intensity is not provided between the composition layers of the laminate for packaging. In addition, in order to prevent oxidation degradation or microorganism propagation of contents food by the oxygen inside a packaging object, or the transmission of oxygen from the outside conventionally, a removal means of oxygen inside the packaging is provided. For example, technology of removing oxygen from packaging material using a synthetic resin kneaded by L-ascorbic acid and the ferrous ion compound (JP,4-39241,Y), packaging material which prevents the heat deterioration of the oxygen scavenger at the time of manufacture, and prevents the bleeding out of the oxygen scavenger by having the adhesives layer mixed with ascorbic acid (derivative) and the transition metal compound of a reaction accelerator (JP,6-190960,A), packaging material which prevents heat damage of the oxygen scavenger at the time of manufacture, and prevents the bleeding out of the oxygen scavenger by dispersing and adhering a deoxidizer and/or a moisture-absorption agent at the adhesives layer on a substrate sheet, and covering a protection layer (JP,60-10768,U).

However, in the packaging material for quality retention of a contents product, a suitable packaging material for quality retention is not conventionally proposed to the liquid food warmed (heated) and sold, for example, a coffee drink, oolong tea, etc. Conventionally, various agents are enumerated as an oxygen scavenger as mentioned above. However, for several weeks or several months, when storage / selling exhibition is carried out in a vending machine or a hot chamber in warming/ heating conditions, a suitable packaging material, especially a packaging material made of paper (fibrous) is not suggested. A method of manufacturing of a good laminate for packaging without peeling (delamination) between layers is not disclosed by the conventional technology.

WO 94/15786 discloses a method of packaging food such us fruit juice in a laminated structure, comprising a substrate, for example paper board and/or aluminium foil, and at least one polyolefine film, for example LDPE, containing a hindered phenolic antioxidant, such as Irganox® 1010. The food is packaged such that it is in contact only with the polyolefine film.

In this invention, the purpose is to provide a manufacturing process of a good laminate for packaging without peeling (delamination) between layers based on the above-mentioned background. The purpose of this invention is to offer a packaging laminated material with a good layer adhesion intensity for retaining the quality of a heated liquid food (for example, a coffee drink, oolong tea, etc.) which is especially kept and sold for several weeks to several months in a vending machine or a hot chamber. Moreover, the purpose of this invention is to offer a method of manufacturing of the laminate for packaging which can carry out a converting effectively and efficiently easily in laminated package material manufacture.

### Disclosure of Invention

The above-mentioned object is solved by the method of manufacturing of the laminated packaging material of claim 1. That is, the method of manufacturing of the laminate of this invention is characterized by
manufacturing the laminate for web shape packaging which consists of an innermost film which has at least a polyolefin layer in the surface to be laminated, an aluminum foil, a polyolefin lamination layer, and a fibrous carrier layer, by the following steps:
a) a step of coating at least one adhesive resin chosen from an ethylene acrylic acid copolymer, an ethylene methacrylic-acid copolymer, and an ionomer onto the surface to be laminated of the innermost film,
b) a step of laminating the aluminum foil on the adhesive resin coating surface of the innermost film by the application of an adhesives for dry laminations, or an anchor coat agent,
c) a step of aging and keeping a reel after reel-rolling up of the web shape laminate obtained by the lamination of the aluminum foil,
d) a step of un-winding the laminate from the kept reel and processing the aluminum-foil surface by corona discharge, and
e) a step of laminating the fibrous carrier layer by an extrusion lamination of molten laminations resin to the aluminum-foil surface processed by a corona discharge.

In a preferable embodiment of the method of manufacturing of the laminate by this invention, the polyolefin of the innermost film is characterized by having no contaminant or few contaminants, such as a low-molecular-weight component and an additive.

In a preferable embodiment of the method of manufacturing of the laminate of this invention, the polyolefin of the innermost film contains at least a linear low density polyethylene with a narrow molecular weight distribution, and is characterized by having the properties parameter of the average density of 0.900-0.915 g/cm³, peak melting point of 88-103°C, the melt flow index of 5-20, the swelling ratio (SR) of 1.4-1.6, and a layer thickness of20-50 µm.

In a preferable embodiment of the method of manufacturing of the laminate of this invention, the adhesives for dry laminations are characterized by containing the quality maintenance agent for food to be heated. The quality maintenance agent for food to be heated includes ascorbic acid or an ascorbate, and/or vitamin E.

In a preferable embodiment of the method of manufacturing of the laminate of this invention, it is characterized by containing the quality maintenance agent for food to be heated which are the minute stratified silicate substantially dispersed uniformly in the adhesives layer for dry laminations and ascorbic acid or an ascorbate, and/or vitamin E.

In a preferable embodiment of the method of manufacturing of the laminate of this invention, it is characterized by keeping the reel shape laminate according to aging of 48 - 72 hours with a temperature of 15 - 30 °C.

### Best Mode for Carrying Out the Invention

In this invention, the laminate for packaging is a web shape laminate which consists of an innermost film which has at least a polyolefin layer in the surface to be laminated, an adhesives layer for dry laminations, aluminium foil, a polyolefin lamination layer, and a fibrous carrier layer.

In this invention, the innermost film which has the above-mentioned polyolefin layer is the single film of polyolefin, or a laminated film containing the polyolefin layer. The polyolefin includes polyethylene (low density polyethylene, middle-density polyethylene, high-density polyethylene, and linear low density polyethylene, the so-called metallocene PE, etc.), polypropylene (homo polypropylene, ethylene propylene copolymer, etc.), polybut-1-ene, and polyhex-1-ene. The polyolefin is polyethylene preferably, is low density polyethylene and metallocene PE further preferably, and is the metallocene PE in the most preferable embodiment to this invention.

Usually, the fibrous carrier layer (paper substrate) which can be used in this invention is a material made from kraft pulp, and needs outstanding intensity and outstanding low water absorptivity. As examples, there are a bleached paper (FBL), paper (UBL) which is not bleached, paper (DUPLEX) of FBL and UBL, clay coat paper, a multilayer duplex paper (MB), etc., and anything may be used in this invention.

The polyolefin lamination layer used in order to laminate the laminated package material of this invention is chosen from low density polyethylene, LLDPE which contains at least the linear low density polyethylene which has a narrow molecular weight distribution, and has the specific properties parameter, an ethylene vinyl acetate copolymer (EVA), and an ionomer. The LLDPE works as an adhesive thermoplastic material layer between a paper substrate (fibrous carrier) layer and a barrier layer. The LLDPE contains at least the linear low density polyethylene which has a narrow molecular weight distribution, and has the properties of average density 0.890-0.925 g/cm³, a peak melting point of 88-103 °C, melt flow index of 10-20, swelling ratio (SR) of 1.4-1.6, and a layer thickness of 10-25 µm. By use of LLDPE, since the extrusion laminating properties and its converting properties in the case of package material manufacture are excellent, manufacture of package material laminating can carry out very good.

The aluminium foil in this invention is a gas barrier layer, for example, is aluminium foil with the thickness of 5-10 µm. Gas barrier layers other than aluminium foil can be included if needed.

In order to improve an adhesive property with a gas barrier layer and other laminating composition layers, a layer can also be laminated as an adhesive layer by use of the synthetic resin of an ethylene vinyl acetate copolymer (EVA) and the ionomer (IO) which is cross linked between ethylene vinyl-methacrylate copolymer molecular by the metal ion. The suitable thickness of the adhesives layer is 10-50 µm approximately. Preferably, the adhesives layer is EVA or 10 with a layer thickness of 10-18 µm.

The laminating material for packaging for paper containers by this invention can have the ink layer by printing provided in the outside surface of the semi material when it is not laminated to the outermost resin layer yet, or the ink layer formed in the outside surface of a sealable outside resin layer. Ink includes aqueous or oily ink for flexo printings, oily ink for gravure, hardenable ink for offset printing, etc. In the embodiment of the preferable package material for paper containers of this invention, the ink layer includes partial common components (for example, imine component etc.) with the component included in the anchor coat agent layer adhered with this ink layer.

In this invention, the thermoplastic material which laminates on the package material outside surface includes polyolefin resin, such as polyethylene, polypropylene, and an ethylene copolymer. The thermoplastic material includes the low density polyethylene (LDPE) used conventionally, linear low density polyethylene (LLDPE) excellent in the resistance (oil resistance, acid resistance, penetration resistance, etc.) against a content, middle-density polyethylene, the coextrusion film containing polyethylene, etc.

In step (a) in the method of manufacturing of this invention, at least one adhesive resin chosen from an ethylene acrylic acid copolymer, an ethylene methacrylic-acid copolymer, and an ionomer is covered on the surface to be laminated of an innermost film. The content of the acrylic acid of an ethylene acrylic acid copolymer and the content of the methacrylic acid of an ethylene methacrylic-acid copolymer are 5- 15 wt. % preferably. The melt flow rate (MFR) is preferably 5-10g / 10 minutes (load 2.13 x 10⁵ Pa (2.16 kgf/cm³), temperature of 190 °C).

In this invention, the coating method of the adhesive resin of the polyolefin surface includes the wet lamination method, the dry lamination method, the non-solvent type dry lamination method, the extrusion lamination method, T die coextrusion method, the coextrusion lamination method, the inflation method, the method of applying the molten adhesive resin to a polyolefin film surface, the method of applying an adhesive resin film surface of the molten polyolefin, etc. Although the coating thickness of an adhesive resin can be suitably changed by the use of a laminate etc., the thickness is 2-20 µm, and is preferably 5-15 µm.

In step (b) in the method of manufacturing of this invention, an aluminum foil is laminated on the adhesive resin coated surface of the innermost film by use of the adhesives for dry laminations, or the application of an anchor coat agent.

When using the dry laminating method, the adhesives which constitute the adhesives layer include concretely the two-liquid cure type urethane adhesives used in a dry lamination etc., polyester urethane adhesives, polyester urethane adhesives, acrylics adhesives, polyester adhesives, polyamide adhesives, polyvinyl acetate adhesives, epoxy adhesives, rubber adhesives, etc. The aluminum foil is laminated on the adhesive resin coating surface of the innermost film using the above-mentioned adhesives for dry laminations.

Moreover, when using an anchor coat agent, an isocyanate (urethane) anchor coating agent, a polyethylene imine anchor coating agent, a poly butadiene anchor coating agent, an organic titanium anchor coating agent, a polyurethane anchor coating agent, a poly acrylics anchor coating agent, a polyester anchor coating agent, an epoxy anchor coating agent, a polyvinyl acetate anchor coating agent, a cellulose anchor coating agent, the anchor coat agent of the adhesives for a lamination, etc. are used. By the application to the aluminum-foil surface of an anchor coat agent, an aluminum foil is laminated on the adhesive resin coated surface of the innermost film.

In step (c) of the method of manufacturing of this invention, the laminate is kept under aging after reel shape rolling up of the web shape laminate obtained by the lamination of an aluminum foil. A storage space is improved as a result of rolling round a laminate to a reel state. At the rest steps, the increase in efficiency of processing and work can be attained. However, the aluminum-foil surface may contact the innermost surface of the innermost film directly, and contaminants (for example, a low-molecular-weight component, a remains catalyst, etc.) may shift / bleed from the innermost film to the aluminum-foil surface.

In a preferable embodiment, a reel shape laminate is kept under aging in the normal temperature of 15 - 30 °C for 48 to 72 hours. In this embodiment, the migration velocity of the contaminant to an aluminum-foil surface can be controlled by storage at a comparatively low temperature. This contact and contamination can be minimumized by short storage time. In this invention, although normal temperature and a short period as mentioned above are preferred, long-term aging and storage under high temperature are also possible. In this invention, the step conditions of the manufacturing process can be changed broadly.

In step (d) in the method of manufacturing of this invention, the laminate is pulled out from the kept reel and the aluminum-foil surface is processed by the corona discharge. In this invention, when laminated, corona processing is again performed to the aluminum-foil surface. Additional processing of ozonization etc. can be performed if needed.

In step (e) in the method of manufacturing of this invention, the fibrous carrier layer is laminated by the extrusion lamination of a molten lamination resin to the corona-discharge processed aluminum-foil surface.

The resin for laminations which can be used in this invention includes the following; for example, a polyethylene (including for example, metallocene PE) and ethylene- α-olefin copolymer, polypropylene, polybutene, polyisobutene, polyisobutylene, polybutadiene, polyisoprene, a copolymer of ethylene and unsaturated carboxylic acid, such as an ethylene methacrylic-acid copolymer or an ethylene acrylic acid copolymer, or an acid modified polyolefin resin that modified them, an ethylene ethyl acrylate copolymer, an ionomer resin, an ethylene vinyl acetate copolymer, etc.

In this step, laminated composition layers, such as an ink layer, a metal vapor deposition layer, a metal vapor deposition support film, and an outermost thermoplastic material layer, may also be included in a fibrous carrier layer in addition to this carrier layer.

In a preferable embodiment of the method of manufacturing of the laminate of this invention, the adhesives for dry laminations or an anchor coat agent contains a food-to-be-heated quality maintenance agent (that is, a quality maintenance agent for food to be heated). The food-to-be-heated quality maintenance agents are ascorbic acid or an ascorbate, and/or vitamin E.

The laminate of the embodiment has the layer of the adhesives containing the food-to-be-heated quality maintenance agent. It is preferable to use adhesives which can be diluted with an aqueous solvent , for example, when a food-to-be-heated quality maintenance agent is water-soluble. Specifically, the adhesives for polyester dry lamination, polyurethane adhesives, the adhesives for polyimine dry lamination, the adhesives for a dry lamination of polyester polyurethane, a urethane anchor coat agent, a polyurethane anchor coat agent, the polyimine anchor coat agent, the anchor coat agent of polyester polyurethane, a silicone anchor coat agent, a quick cure type urethane anchor coat agent, an epoxy amine anchor coat agent, etc. can be used.

The adhesives containing an anchor coat agent contain a food-to-be-heated quality maintenance agent. The quality maintenance agent blocks the air and the quality-inhibitors which have penetrated the gas barrier layer in the warming state to the inner layer side of packaging laminated material. The quality maintenance agent absorbs the air dissolved into liquid food. As a food-to-be-heated quality maintenance agent, an oxygen absorber of iron/enzyme, a chelate compound which has a porphyrin ring, and an oxygen absorber which consists of an organic compound and a reaction accelerator are not preferable. Specifically, an organic compound which consists of ascorbic acid, its derivative, or fatty acid, a reaction accelerator which consists of a transition metal compound, and an organic compound which consists of a transition metal complex of poly carboxylic acid or salicylic acid chelate and a reaction accelerator of ascorbic acid of a reducing agent are not preferable. On the other hand in the preferable embodiment of this invention, ascorbic acid or an ascorbate, and/or vitamin E are preferable as a food-to-be-heated quality maintenance agent.

As the dispersing method of the food-to-be-heated quality maintenance agent to the above-mentioned adhesives, if a food-to-be-heated quality maintenance agent is fully dispersed, optional methods are employable. Specifically, the method of kneading / distributing can be used in adhesives or its solution after absorption of the solutionized food-to-be-heated quality maintenance agent on the powder and other carrier objects of a resin, or the microencapsulation by the gas transmission material of a food-to-be-heated quality maintenance agent. In addition, when adhesives consist of two kind of liquid, after mixing a food-to-be-heated quality maintenance agent with either the main agents or a curing agent, the method of adding the remainder is also possible. After containing the main agents and a curing agent, the method of adding a food-to-be-heated quality maintenance agent is preferable. It is because the method does not damage the adhesion ability of adhesives.

The content of the food-to-be-heated quality maintenance agent to its adhesives and anchor coat agent changes with absorptivity ability made into the purpose. The preferable content of a food-to-be-heated quality maintenance agent is 1 - 50 wt. % to adhesives, and it is 5 - 20 wt. % further preferably. In cases where the content is less than the above, the gas-absorpion performance falls remarkably. On the other hand, when it is more than the above, trouble arises in the adhesive ability of the adhesives.

In the mixture and kneading to the anchor coat agent of a food-to-be-heated quality maintenance agent, it is preferable to avoid hot conditions exceeding 40 °C. The mixture temperature conditions is under normal temperature, for instance, 15-30°C, preferably 10-35°C.

In a preferable embodiment in this invention, the adhesives layer contains the minute sheet silicate dispersed substantially uniformly.

The phyllosilicate which has a mean particle size within the range of 1-80 µm, and does not include the particle size of 300 µm or more in an adhesives layer preferably is contained at 0.1 - 10 wt. %. In the packaging material, the phyllosilicate is substantially dispersed uniformly in 5 nm (50 Angstrom) or more of distance between layers. In this embodiment, the shape of a minute layer of a silicate means one unit of the substance with one side of 0.002-1 µm, and the thickness of 0.6-2 nm (6-20A). The distance between layers of the phyllosilicate means the distance between the center of gravity of the plate of phyllosilicate. The uniform dispersion of phyllosilicate means the state where 50% or more of the silicate separates into every sheet without lump formation, keeps the distance between layers 10 nm (100 A) or more in parallel and/or random mutually, and disperses on the molecular level in the case of dispersion of phyllosilicate. 70% or more of phyllosilicate is in the above-mentioned state still more preferably.

In the raw material of such a sheet silicate, the phyllosilicate mineral (phyllosilicate) which consists of layers of a magnesium silicate or aluminum silicate can be shown. In a preferable embodiment of this invention, the phyllosilicate (clay mineral) which has between layers a metal ion (except for Na, K, Li, and calcium) (for example, metal ion chosen from Ag, Zn, Co, Cd, and Cu) or its metal compound can be used. The phyllosilicate itself has good antibacterial ability to various microorganisms, such as a pseudomonas aeruginosa, coliform bacillus, and a Staphylococcus aureus. Therefore, the antibacterial ability is given to the packaging laminated material containing the phyllosilicate.

In the method of manufacturing of this antibacterial phyllosilicate, the antibacterial phyllosilicate containing a metal ion can be obtained by separation, washing, and drying of a precipitate which is obtained according to dispersion of the water swelling clay mineral to the solution of organic solvents, such as methanol and acetone, and water with the water-soluble salt of the metal chosen from Ag, Zn, Co, Cd, and Cu. Moreover, by another method, an antibacterial phyllosilicate with a metal hydroxide can be obtained from the precipitate obtained by dropping of the alkali solution to the above-mentioned dispersing liquid.

A preferable blended quantity of phyllosilicate is 0.1 - 10 wt. % further preferably 0.05 to 15wt. % to adhesives. Since the improvement effects, such as an oxygen barrier, durability over stress, and a non-scalping / quality preservability, are low, less than 0.05wt. % of the blended quantity of phyllosilicate is not preferable.

In the preferable embodiment of the method of manufacturing of the laminate of this invention, the polyolefin of the innermost film has the following properties parameter. The polyolefin contains the linear low density polyethylene which has a narrow molecular weight distribution, and has the properties parameter of the average density of 0.900-0.915 g/cm³ (preferably 0.905-0.910 g/cm³), peak melting point of 88-103 °C (preferably 93-103 °C), the melt flow index of 5-20, the swelling ratio (SwellingRatio, SR) of 1.4-1.6, and layer thickness of 20-50 µm (preferably 20-30 µm).

Such linear low density polyethylene is a blend polymer which contains at least the linear low density polyethylene (mLLDPE) which has a narrow molecular weight distribution obtained by polymerization which used for example, the metallocene catalyst. The ethylene - α - olefin copolymer is obtained as this mLLDPE by the polymerization in which the metallocene catalyst can be used. As the active site of the present catalyst is uneven and called multi-site catalyst, since the active site is uniform, the metallocene catalyst is also called single site catalyst.

Specifically, the resin of mLLDPE includes the ethylene - α - olefin copolymer which polymerized using metallocene catalysts, such as the brand name "AFFINITY" and brand name "ENGAGE." (DOWCHEMICAL), the brand name "EXACT" (EXXON CHEMICAL), the brand name "KERNEL" (Mitsubishi Chemical), the brand name "EVOLUE" (Mitsui Petrochemical).

In this invention, as long as the above-mentioned properties parameter is kept, resins other than above-mentioned mLLDPE can be used. In cases where it is difficult to obtain the above-mentioned properties parameter by mLLDPE sole, other polymer components can be blended. The above-mentioned other polymers are thermoplastic resins, such as polyolefin resin, such as polyethylene, polypropylene, and an ethylene copolymer, and a polyester resin.

The polymer includes conventional low density polyethylene (LDPE) and linear low density polyethylene (LLDPE) excellent in the resistance (oil resistance, acid resistance, penetration resistance, etc.) over a content, the coextrusion plymer of middle-density polyethylene and polyethylene, etc.

The density of the low density polyethylene blended as mentioned above is 0.91 - 0.93 g/cm³. Molecular weight is 1x10² to 1x10⁸ Da, and a melt flow rate (MFR) is 0.1-20g/10min. In addition, although the resin is additive-free basically, according to a use, various additives, such as an antioxidant, a ultraviolet-absorption agent, an antistatic agent, lubricant, an anti blocking agent, a fire retardancyized agent, inorganic and an organic bulking agent, a coating material, and a pigment, can also be added suitably.

### Example

### <Example 1>

By the coextrusion of the inflation method of low density polyethylene (brand name SUMIKASENL718H by Sumitomo Chemical), and an ethylene-acrylic acid copolymer (brand name POLYETHY A221 M by Mitsubishi Chemical), a web shape film laminate (30 µm of polyethylene layers, 10 µm of ethylene acrylic acid copolymers) is obtained. Immediately, an aluminum foil with a thickness of 9 µm is laminated in the ethylene acrylic acid copolymer surface of the film laminate with polyurethane adhesives (brand name LX-747 A/KX -75 by Dainippon Ink & Chemicals). Then, a laminate is rolled round to a reel shape. The laminate of a reel shape is aged and kept for four days at 40 °C for the cure of the adhesive resin. The food-to-be-heated quality maintenance agent, i.e., ascorbic acid, is added by the above-mentioned polyurethane adhesives.

Subsequently, a laminate is un-wound from the kept reel and the aluminum-foil surface is processed by the corona discharge (the corona-discharge processing machine by PILLAR, output of 15 W/m²).

In the laminator provided down-stream of the corona-discharge processing step, the non-printed surface of the printing raw paper which it un-wound from the roll is laminated by the extrusion lamination from the high temperature T die of melted low density polyethylene onto the corona-discharge processing aluminum-foil surface of a web shape laminate. In this laminator, melted low density polyethylene is simultaneously extruded to the printing surface of the raw paper, and a waterproof outermost thermoplastic resin layer is formed.

About the obtained packaging laminated material, the adhesion intensity between an aluminum-foil surface and a web shape film laminate (polyethylene film) is measured by JIS K6854 (stretching velocity;50 mm/min.). The adhesion intensity as the result is 1.0 kgf/25 mm. The intensity shows sufficient adhesion intensity actually. On the other hand, the adhesion intensity at the time of manufacturing the above-mentioned packaging laminated material, without carrying out corona-discharge processing of the aluminum-foil surface is 0.2 kgf/25 mm, and is inadequate actually.

A brick shape container is obtained by formation of the crease line to the packaging laminated material obtained in the example, tube shape forming filling of the liquid food into tube-like package material by the longitudinal seal of the package material, the transversal seal to the transversal direction of tube-like package material, forming to cushion form primary shape, cutting by the fixed interval, and forming to the final shape by folding in alignment with the crease line.

In cases where liquid food is green tea, the increase in the oxygen concentration of the liquid after preservation for three weeks and two months under the conditions of 60-75 °C and 60%RH is not observed. Moreover, there is no generating of foreign matters, such as mold, and the deterioration of flavor, and a scent or anything unusual are not seen. Similarly, in cases where liquid food is a coffee drink, the result of the same evaluation is good. There is no generating of foreign matters, such as mold, and deterioration of flavor and a scent or anything unusual are not observed.

### <Example 2>

Polyester adhesives are used as substitution of polyurethane adhesives. The food-to-be-heated quality maintenance agent containing adhesives which contained L-sodium ascorbate of the food-to-be-heated quality maintenance agent of 10 weight parts to the solid part 100 weight part of the adhesives (polyester adhesives (trade name : TAKERAK A- 515 / A-50, by Takeda Chemical)) are used. Except obtaining laminated material by the application (the amount of applications : approximately 3.0 g/m² (at the time of drying)) of these adhesives by the photogravure printing (a depth of 80 µm) of 120 line/inch, and its lamination, the laminated material for packaging by this invention is obtained and evaluated like Example 1, and the same result as the above is obtained.

### <Example 3>

Except using the vitamin E as an alternative of ascorbic acid, and the ionomer as an alternative of the ethylene acrylic acid copolymer of an adhesive resin (Mitsui DU PONT POLYCHEMICAL, trade name HIMIRANE AM7207), the laminated material for packaging by this invention is obtained and evaluated like Example 1, and the same result as the above is obtained.

### <Example 4>

By extrusion coating of the ethylene acrylic acid copolymer (trade name POLYETHY A221M by Mitsubishi Chemical) to a low density polyethylene film (trade name SUMIKACEN L718H by Sumitomo Chemical), a web shape film laminate (polyethylene layers of 30 µm / ethylene acrylic acid copolymers of 10µm) is obtained.

The sodium L-ascorbate of a food-to-be-heated quality maintenance agent is mixed to a silicone anchor coat agent under the normal temperature of 25 °C in 10 weight parts to the solid part 100 weight part of the anchor coat agent.

The food-to-be-heated quality maintenance agent containing anchor coat agent is applied to the whole surface of an aluminum foil (9 µm in thickness), the aluminum foil is laminated with the adhesive resin surface of the web shape film laminate, and the laminate is rolled round to a reel. The reel shape laminate is aged and kept for three days at 30 °C for the cure of the adhesive resin.

Subsequently, the laminate is un-wound from the reel, and the aluminum-foil surface is processed by the corona discharge (the corona-discharge processing machine made from PILLAR, output 15 W/m²).

The laminate is obtained by sending of the printing packaging paper to the extrusion laminator after the corona-discharge processing step and extruding of the low density polyethylene material from an extruding machine to between the paper surfaces and aluminum foil external surface from the high temperature T die. Finally, the laminated material for packaging of one example by this invention which laminated low density polyethylene material on the external surface of this laminate is obtained.

About the obtained packaging laminated material, the adhesion intensity of an aluminum-foil surface and a film laminate (polyethylene film) is measured based on JIS K6854 (stretching velocity;50 mm/min). The adhesion intensity of the result is 1.4 kgf/25mm. This intensity shows sufficient adhesion intensity actually. Moreover, 30 day extension of the period of aging and storage does not bring about strength deterioration. On the other hand, in cases where it manufactures packaging laminated material without coating an adhesive resin although an aluminum-foil surface is processed by the corona discharge, the adhesion intensity of an innermost film and an aluminum foil is 0.4 kgf / 25mm, which is inadequate actually.

The obtained packaging material shows the oxygen permeability of less than 5 cm³/m² 24 hr-atm (23 °C, 50%RH). A brick shape container is obtained by formation of the crease line to the packaging material, tube forming by the longitudinal seal of the package material, filling of the filling liquid food into tube-like package material, the transversal seal to the transversal direction of tube-like package material, forming to primary shape like a pillow, cutting to each, and the final shape forming by folding in alignment with the crease line.

In cases where the liquid food is green tea, the increase in the oxygen concentration in a liquid is not observed after preservation for three weeks and two months the conditions of 60-75 °C and 60%RH. Moreover, there is no generating of foreign matters, such as mold, and deterioration of flavor, and a scent or anything unusual are not observed. Similarly, in cases where liquid food is a coffee drink, the result of the above-mentioned evaluation is good.
There is no generating of foreign matters, such as mold, and deterioration of flavor and a scent or anything unusual are not observed.

### <Example 5>

Except use of the vitamin E as an alternative of ascorbic acid, and an ionomer (Mitsui du Pont POLYCHEMICAL, trade name HIMIRAN AM7207) as the alternative of an ethylene acrylic acid copolymer, the laminated material for packaging by this invention is obtained and evaluated like Example 4, and the same result as the above is obtained

### <Example 6>

Except having used the quick cure type urethane anchor coat agent as an alternative of a silicone anchor coat agent, the laminated material for packaging by this invention is obtained and evaluated like Example 4, and the same result as the above is obtained.

### <Comparative example 1 >

The packaging material of the comparative example is obtained and evaluated like Example 4 except use of the ascorbic acid and the transition metal compound as an alternative of the food-to-be-heated quality maintenance agent of an example 4, no processing of the corona discharge to an aluminum-foil surface, and manufacture of packaging laminated material without coating of an adhesive resin. The result is that the adhesion intensity of an innermost film and an aluminum foil is 0.2 kgf / 25mm, and is inadequate actually, and quality of the food to be heated cannot be maintained at a long period of time.

### <Comparative example 2>

The laminated material for packaging of a comparative example is obtained and evaluated like Example 4 except no covering of the adhesive resin to the innermost film of an example 4, the corona-discharge processing as the alternative, and aging and storage for three days and for 30 days. The adhesion intensity of an innermost film and an aluminum foil is 1.2 kgf / 25mm in three days, and is 0.4 kgf/ 25mm in 30 days. The result that the intensity falls remarkably, and is inadequate actually, and quality of the food to be heated cannot be maintained by long-term aging and storage at a long period of time is obtained.

### <Example 7>

With the blend with linear low density polyethylene (mLLDPE) with the narrow molecular weight distribution which polymerized with the metallocene catalyst, and the low density polyethylene by the high-pressure method, an innermost film with the average density of 0.910 g/cm³, the peak melting point of 97 °C, the melt flow index of 15, the swelling ratio of 1.5, and a thickness of 25 µm layer is obtained. The web shape laminate is obtained by coating of the ethylene methacrylic-acid copolymer (made in Mitsui du Pont Chemical, trade name NEWCLELAN2012C) to the film. The laminate is further laminated with the adhesives for dry laminations of Example 2 on the whole surface of an aluminum foil with a thickness of 9 µm, a web shape laminated film is prepared, and the laminated film is rolled round to a reel.

The reel shape laminate is aged and kept for three days at 25 °C for the cure of the adhesive resin. Subsequently, the laminate is un-wound from the kept reel and the aluminum-foil surface is processed by the corona discharge (the corona-discharge processing machine by Pillar company, output 15 W/m²).

On the other hand, the low density polyethylene (density =0.920 g/cm³, MI=5.1) by the high-pressure method is extrusion coated at the extrusion temperature of 330 °C on a paper substrate (weight =320 g/m²) by 20 µm in thickness, and an outermost thermoplastic material layer is laminated. In the laminator provided down-stream at the corona-discharge processing step, web shape laminated package material is obtained by fusion extrusion of the blend adhesive thermoplastic material layer of the linear low density polyethylene (mLLDPE) of the narrow molecular weight distribution which polymerized with the metallocene catalyst, and the low density polyethylene by the high-pressure method between the paper surface of low density polyethylene / paper substrate, and the aluminum-foil side of the aluminum-foil laminate. The blend adhesive thermoplastic material has the average density of 0.920 g/cm³, 99 °C of peak melting point, the melt flow index of 17, the swelling ratio of 1.5, and 12 µm of the layer thickness.

In the obtained packaging laminated material, the adhesion intensity between an aluminum-foil surface and a film laminate (polyethylene film) is measured based on JIS K6854 (stretching velocity;50 mm/min). The adhesion intensity of the result is 1.6 kgf / 25mm. This intensity shows sufficient adhesive strength actually. On the other hand, in manufacture of the packaging laminated material without applying the corona discharge to the aluminum-foil surface, and non-coating of an adhesive resin, the adhesion intensity between the innermost film and its aluminum foil is 0.8 kgf / 25mm, and intensity reduces it by half.

The obtained packaging material shows an oxygen permeability of less than 5 cm³/m² 24 hr-atm (23 °C, 50% RH). The packaging material is formed in the brick final shape. In cases where liquid food is green tea, the increase in oxygen concentration in the liquid is not observed after preservation for three weeks and two months under the conditions of 60-75 °C and 60%RH. Moreover, there is no generating of foreign matters, such as mold, and deterioration of flavor, and a scent or anything unusual are not observed. Similarly, in cases where liquid food is a coffee drink, the result of the same evaluation is good. There is no generating of foreign matters, such as mold, and deterioration of flavor and a scent or anything unusual are not observed.

### <Example 8>

The laminated material for packaging and the paper carton of a further brick type are produced like Example 7 except using the blend thermoplastic material of the linear low density polyethylene (mLLDPE) of the narrow molecular weight distribution which polymerized with the metallocene catalyst, and the low density polyethylene by the high-pressure method as an alternative of the low density polyethylene by the high-pressure method of the outermost thermoplastic material layer in Example 7. The blend thermoplastic material has the average density of 0.915 cm³, 95 °C of peak melting point, the melt flow index of 17, the swelling ratio of 1.5, and 18 µm of layer thickness. Furthermore, the laminate and paper carton are similarly estimated as Example 7. The pattern desgin color printed by paper-layer external surface can be vividly viewed from the outside with gloss through the transparence outermost thermoplastic material layer.

As an understanding from the above-mentioned example, a laminate good for packaging which does not have peeling between the layers of a laminate can be obtained by the method of manufacturing of the laminate for packaging of this invention. Especially, a packaging laminated material aiming at quality retention of the products (for example, a coffee drink, oolong tea, etc.) of the liquid food kept and sold in a vending machine or a hot chamber in the high temperature state for several weeks to several months can be offered, and packaging laminated material with good layer adhesion intensity can be offered. Moreover, in the laminated package material manufacture for packaging, the reel shape laminate for laminated can be kept at a long period of time, with the adhesion possibility maintained. Easily, a converting can be carried out effectively and efficiently.

Moreover, in the embodiment in which a food-to-be-heated quality maintenance agent is added, since the high temperature for a molten lamination is unnecessary, deterioration of the performance of a quality maintenance agent can be prevented. Since a quality maintenance substance is contained inside laminated material, the quality maintenance substance does not contact content food directly. Therefore, there is no problem of bleeding of the quality maintenance substance, and the laminate is safe and applicable to packaging of a liquid.

Furthermore, in the embodiment which uses metallocene polyethylene for the innermost film, since the molecular weight distribution is narrow and the low-molecular-weight components are few, contamination of the aluminum-foil surface at the time of aging storage in the reel state is reduced. The layer adhesion intensity of the laminated inside of the body becomes better and more firm by the method of manufacturing by this invention. And with the metallocene polyethylene of an innermost film, tougher seal intensity is made possible, influence is not received in the temperature of a filling content, but a good seal is obtained.

In the embodiment in which the minute phyllosilicate disperses substantially, uniformly a packaging laminate in which the dispersing layer has a gas barrier and has non-scalpings, such as good perfume and flavor, with an aluminum foil can be obtained.

### Industrial Applicability

The laminate obtained by this invention is applicable to filling packaging of liquid products, such as cow's milk, a lactic-acid-bacteria drink, liquid soup, a fruit-juice drink, barley tea, green tea, oolong tea, an alcoholic beverage, a seasoning, medical supplies, cosmetics, a coating material, adhesives, ink, a developer, etching liquid, and others. Preferably, the laminate can be formed in an above-mentioned liquid food paper container (containers, such as a one-piece type, a two-piece type, and a three-piece type), a composite can, an insert forming container, a double container, etc.

## Claims

1. A method of manufacturing a laminate
**characterized by**
manufacturing the laminate for web shape packaging which consists of an innermost film which has at least a polyolefin layer in the surface to be laminated, an aluminum foil, a polyolefin lamination layer, and a fibrous carrier layer, by the following steps:
a) a step of coating at least one adhesive resin chosen from an ethylene acrylic acid copolymer, an ethylene methacrylic-acid copolymer, and an ionomer onto the surface to be laminated of the innermost film,
b) a step of laminating the aluminum foil on the adhesive resin coating surface of the innermost film by the application of an adhesives for dry laminations, or an anchor coat agent,
c) a step of aging and keeping a reel after reel-rolling up of the web shape laminate obtained by the lamination of the aluminum foil,
d) a step of un-winding the laminate from the kept reel and processing the aluminum-foil surface by corona discharge, and
e) a step of laminating the fibrous carrier layer by an extrusion lamination of molten laminations resin to the aluminum-foil surface processed by a corona discharge.

2. A method of manufacturing of the laminate according to claim 1 **characterized by** the polyolefin of the innermost film including no contaminant or a reduced content of contaminant.

3. A method of manufacturing the laminate according to claim 1 **characterized by** the polyolefin of the innermost film containing at least the linear low density polyethylene which has a narrow molecular weight distribution, and having the properties parameter of the average density of 0.900-0.915 g/cm³, peak melting point of 88-103 °C, a melt flow index of 5-20 g/10 min, a swelling ratio (SR) of 1.4-1.6, and a layer thickness of 20-50 µm.

4. A method of manufacturing of the laminate according to claim 1 **characterized in that** the adhesives for dry laminations contain a food-to-be-heated quality maintenance agent, and the food-to-be-heated quality maintenance agent is ascorbic acid or an ascorbate, and/or vitamin E.

5. A method of manufacturing of the laminate according to claim 1 **characterized in that** the minute phyllosilicate is substantially uniformly dispersed in the adhesives layer for dry laminations, and the food-to-be-heated quality maintenance agent is ascorbic acid or an ascorbate, and/or vitamin E.

6. A method of manufacturing the laminate according to claim 1 **characterized by** aging the reel shape laminate for 48-72 hours with a normal temperature of 15 - 30 °C.

## Patentansprüche

1. Verfahren zur Herstellung eines Laminats,
**gekennzeichnet durch**
die Herstellung des Laminats für einen bahnförmigen Packstoff, welcher aus einer am weitesten innen liegenden Folienschicht besteht, die mindestens eine Polyolefinschicht in der zu laminierenden Oberfläche aufweist, sowie aus einer Aluminiumfolie, einer Polyolefin-Laminierlage und eine faserhaltige Trägerlage, unter Ausführung der folgenden Schritte:
a) einen Schritt zum Aufbringen von mindestens einem klebenden Kunststoff, der aus der Gruppe gewählt ist, die aus einem Ethylen-/Acrylsäure-Kopolymer, einem Ethylen-/Methacrylsäure-Kopolymer und einem lonomer besteht, als Schicht auf die zu laminierende Oberfläche der am weitesten innen liegenden Folienschicht,
b) einen Schritt zum Laminieren der Aluminiumfolie auf die Beschichtungsfläche aus klebendem Kunststoff auf der am weitesten innen liegenden Folienschicht **durch** Aufbringen eines Klebstoffs zur Trockenlaminierung oder eines Verankerungs-Beschichtungsmittels,
c) einen Schritt zum Ausaltern und Halten auf einer Spule nach dem Aufrollen des bahnförmigen Laminats, das **durch** Laminieren der Aluminiumfolie erhalten wurde,
d) einen Schritt zum Abwickeln des Laminats von der gehaltenen Spule und zum Bearbeiten der Oberfläche der Aluminiumfolie **durch** Korona-Entladung, und
d) einen Schritt zum Laminieren der faserhaltigen Trägerlage **durch** Extrusions-Laminieren des schmelzflüssigen Laminier-Kunststoffs auf die **durch** Korona-Entladung bearbeitete Oberfläche der Aluminiumfolie.

2. Verfahren zur Herstellung des Laminats nach Anspruch 1, **dadurch gekennzeichnet, dass** das Polyolefin der am weitesten innen liegenden Filmschicht keinen Verunreinigungsstoff oder einen Verunreinigungsstoff in verringertem Gehalt enthält.

3. Verfahren zur Herstellung des Laminats nach Anspruch 1, **dadurch gekennzeichnet, dass** das Polyolefin der am weitesten innen liegenden Filmschicht mindestens das lineare Polyethylen geringer Dichte enthält, das eine Verteilung des Molekulargewichts über einen schmalen Bereich sowie die folgenden Eigenschaften aufweist: durchschnittliche Dichte von 0,900 - 0,915 g/cm³, Spitzenschmelzpunkt von 88 - 103 °C, einen Schmelzenfließindex von 5 - 20 g/10 Min., ein Quellverhältnis (SR) von 1,4 - 1,6 und eine Schichtdicke von 20 - 50 µm.

4. Verfahren zur Herstellung des Laminats nach Anspruch 1, **dadurch gekennzeichnet, dass** die Klebstoffe Mittel zur Aufrechterhaltung der Qualität von zu erwärmenden Fertiggerichten enthalten und dass das Mittel zur Aufrechterhaltung der Qualität von zu erwärmenden Fertiggerichten Ascorbinsäure oder ein Ascorbat und/oder Vitamin E ist.

5. Verfahren zur Herstellung des Laminats nach Anspruch 1, **dadurch gekennzeichnet, dass** das sehr kleine Phyllosilikat im Wesentlichen gleichmäßig in der Lage aus Klebstoff zur Trockenlaminierung verteilt ist und dass es sich bei dem Mittel zur Aufrechterhaltung der Qualität von zu erwärmenden Fertiggerichten um Ascorbinsäure oder ein Ascorbat und/oder Vitamin E handelt.

6. Verfahren zur Herstellung des Laminats nach Anspruch 1, **dadurch gekennzeichnet, dass** das auf eine Spule aufgewickelte Laminat 48 - 72 Stunden lang bei normaler Temperatur von 15 - 30 °C ausgealtert wird.

## Revendications

1. Procédé de fabrication d'un laminé,
**caractérisé par**
la fabrication dudit laminé pour un matériau d'emballage en feuille continue, qui est constitué par un film le plus intérieur, qui comprend au moins une couche en polyoléfine dans la surface à laminer, ainsi que par une feuille an aluminium, une couche de laminage en polyoléfine et une couche fibreuse de substrat, par réalisation des étapes suivantes :
a) une étape à déposer au moins une résine adhésive parmi un copolymère d'éthylène/acide acrylique, un copolymère d'éthylène/acide méthacrylique et un ionomère, en tant que couche sur la surface à laminer dudit film le plus intérieur,
b) une étape à laminer ladite feuille en aluminium sur la face d'enduction en résine adhésive sur ledit film le plus intérieur par dépôt d'un adhésif de laminage à sec ou d'un agent d'enduction à ancrage,
c) une étape de vieillissement et de tenu sur un rouleau après que le laminé en feuille continue était enroulée, qui était obtenu par laminage de la feuille en aluminium ;
d) une étape à dérouler ledit laminé dudit rouleau tenu et à traiter la surface de ladite feuille en aluminium par décharge en effet de couronne, et
d) une étape à laminer ladite couche fibreuse de substrat par laminage à extrusion de la résine de laminage fondue sur la face de ladite feuille en aluminium, qui était traitée par décharge en effet de couronne.

2. Procédé de fabrication du laminé selon la revendication 1, **caractérisé en ce que** le polyoléfine dudit film le plus intérieur ne contient pas une impureté, ou contient une teneur réduite d'une impureté.

3. Procédé de fabrication du laminé selon la revendication 1, **caractérisé en ce que** le polyoléfine dudit film le plus intérieur contient au moins le polyéthylène à basse densité, qui a une distribution du poids moléculaire étroite et les propriétés suivants : une densité moyenne de 0,900 - 0,915 g/cm³, un point de fusion de pointe de 88 - 103 °C, un indice de fluage de la matière en fonte de 5 - 20 g/10 Min., un rapport de gonflement (SR) de 1,4 - 1,6 et une épaisseur de la couche de 20 - 50 µm.

4. Procédé de fabrication du laminé selon la revendication 1, **caractérisé en ce que** les adhésifs contient des agents à maintenir la qualité des plats cuisinés à chauffer, et **en ce que** ledit agent à maintenir la qualité des plats cuisinés à chauffer est de l'acide ascorbique ou un ascorbate et/ou de vitamine E.

5. Procédé de fabrication du laminé selon la revendication 1, **caractérisé en ce que** le phyllosilicate minime se trouve en une distribution essentiellement homogène dans la couche en adhésif de laminage à sec, et **en ce que** ledit agent à maintenir la qualité des plats cuisinés à chauffer est de l'acide ascorbique ou un ascorbate et/ou de vitamine E.

6. Procédé de fabrication du laminé selon la revendication 1, **caractérisé en ce que** le laminé enroulé sur un rouleau subit un vieillissement à une température normale de 15 à 30 °C pour 48 - 72 heures.
